# FASCICULE DE BREVET EUROPEEN

(11) **EP 1 144 327 B1**
(45) Date de publication et mention de la délivrance du brevet: **06.01.2010**
(21) Numéro de dépôt: 99961094.2
(22) Date de dépôt: 16.12.1999
(51) Int. Cl.: C03C 17/00, C09K 3/18

(54) **VITRAGE A REVETEMENT MESOPOREUX FONCTIONNEL, NOTAMMENT HYDROPHOBE**
VERGLASUNG MIT MESOPORÖSER FUNKTIONELLER, INSBESONDERE WASSERABWEISENDER BESCHICHTUNG
GLAZING WITH FUNCTIONAL MESOPOROUS, IN PARTICULAR HYDROPHOBIC, COATING

(30) Priorité: 21.12.1998 FR 9816115
(43) Date de publication de la demande: 17.10.2001
(73) Titulaire: SAINT-GOBAIN GLASS FRANCE, 92400 Courbevoie (FR)
(72) Inventeur: JACQUIOD, Catherine, F-91190 Gif sur Yvette (FR); BERQUIER, Jean-Marc, F-95170 Deuil la Barre (FR); TEYSSEDRE, Laurent, F-75013 Paris (FR); AZZOPARDI, Marie-José, F-94300 Vincennes (FR)
(74) Mandataire: Muller, René
(86) Numéro de dépôt international: PCT/FR1999/003167
(87) Numéro de publication internationale: WO 2000/037374

(56) Documents cités:
- US-A- 5 112 676
- US-A- 5 645 891
- GOJON C ET AL: "A comparison of immobilization sol-gel methods for an optical chemical hydrazine sensor" SENSORS AND ACTUATORS B, vol. 38, no. 1-3, 1 janvier 1997 (1997-01-01), page 154-162 XP004083686 ISSN: 0925-4005
- FENG X ET AL: "Functionalized monolayers on ordered mesoporous supports" SCIENCE;SCIENCE MAY 9 1997 AMERICAN ASSOC FOR THE ADVANCEMENT OF SCIENCE, WASHINGTON, DC, USA, vol. 276, no. 5314, 9 mai 1997 (1997-05-09), pages 923-926, XP002114376

## Description

La présente invention concerne un vitrage, notamment transparent, et doté de la propriété d'hydrophobie/oléophobie en vue d'obtenir certains effets anti-pluie/anti-salissures ou encore de la propriété d'hydrophilie/oléophilie, ou d'un caractère photocatalytique, associés respectivement à des effets anti-buée/anti-givre et également anti-salissures, ou d'autres propriétés : parfum... A cette fin, un tel substrat est, par exemple, muni d'un revêtement dans le cadre d'applications diverses, comme les vitrages pour véhicules de transport aéronautique, maritime, terrestre (ferroviaire, routier), pour le bâtiment (fenêtres), le mobilier urbain (panneau d'affichage, Abribus...)

Le vitrage est donc transparent ou non et constitué, en général, de verre, céramique, vitrocéramique, matière plastique (poly(méthacrylate de méthyle) (PMMA), polyvinylbutyral (PVB), polycarbonate (PC) ou polyuréthane (PU), copolymère éthylène/acétate de vinyle (EVA) thermoplastique, poly(téréphtalate d'éthylène) (PET), poly(téréphtalate de butylène) (PBT), copolymères polycarbonates/polyester, copolymère cyclooléfinique du type éthylène/norbornène ou éthylène/cyclopentadiène, les résines ionomères, par exemple un copolymère éthylène/acide (méth)acrylique neutralisé par une polyamine, les thermodurcissables ou thermoréticulables tels que polyuréthane, polyester insaturé (UPE), copolymère éthylène/acétate de vinyle...) ou d'une combinaison de plusieurs de ces matériaux.

La propriété d'hydrophobie/oléophobie à laquelle il est fait référence vise le fait que des liquides polaires ou non polaires n'adhèrent pas sur le substrat en formant un film gênant. Un vitrage présentant cette propriété aura une tendance faible ou quasi nulle à retenir les poussières ou salissures de toutes natures, traces de doigts, insectes, etc.

La présence d'eau et/ou de salissures entraîne un aspect inesthétique et, le cas échéant, une diminution de la transparence du vitrage ainsi qu'une altération de la vision à travers celui-ci. Ces dernières sont particulièrement gênantes pour un vitrage utilisé dans le domaine du transport.

La propriété d'hydrophobie/oléophobie - ou non-mouillabilité - d'un substrat consiste en ce que les angles de contact entre un liquide et ce substrat sont élevés, par exemple d'au moins 90° pour l'eau. Le liquide a alors tendance à s'écouler aisément, sous forme de gouttes, sur le substrat, par simple gravité si le substrat est incliné ou sous l'effet de forces aérodynamiques dans le cas d'un véhicule en mouvement. Des agents connus pour conférer cette propriété d'hydrophobie/oléophobie sont, par exemple, des alkylsilanes fluorés tels que décrits dans les demandes de brevets EP 0 492 417, EP 0 492 545 et EP 0 672 779.

Des agents hydrophobes/oléophobes courants sont, en particulier, des alkyl-trihalogéno- ou -trialkoxy-silanes dont le groupe alkyle comporte au moins une extrémité perfluorée, c'est-à-dire consistant en un groupement F₃C-(CF₂)ₙ- dans lequel n est un nombre entier positif ou nul, comme décrits dans la demande de brevet EP 0 719 743.

Les agents hydrophobes/oléophobes sont appliqués de manière connue en solution selon des modes de dépôt classiques avec ou sans chauffage.

L'un des problèmes se posant avec le plus d'acuité dans le domaine de l'invention est celui de la durabilité du revêtement hydrophobe/oléophobe. Celle-ci est en effet affectée par l'érosion qui ne manque pas de se produire plus ou moins, par exemple au cours des opérations de nettoyage du substrat, périodiquement indispensables lorsque celui-ci est transparent, lorsqu'il s'agit de restaurer une vision satisfaisante à travers le substrat. On cherche ainsi constamment à ralentir l'élimination progressive des revêtements hydrophobes/oléophobes de types précités qui se produit notamment sous l'action d'essuie-glaces, d'autant plus qu'une telle élimination peut, de surcroît, résulter d'une dégradation par le rayonnement ultraviolet.

Deux voies principales ont jusqu'à présent été explorées pour augmenter la durabilité des revêtements en limitant les effets de l'érosion. Ces deux voies consistent à augmenter l'adhésion des revêtements aux substrats.

Selon une première approche, la demande EP 0 484 746 préconise la préparation du substrat par un traitement préalable à l'aide d'un primaire du type tétrahalogéno- ou tétraalkoxy-silane.

La demande EP 0 497 189 A2 propose, conformément à une seconde approche, de créer au préalable à la surface du substrat des irrégularités de dimensions comprises, par exemple, entre 1 et 10 micromètres, soit par apport de particules, soit par diverses attaques telles que chimique ou sablage.

Il est précisé, d'autre part, que dans tous les cas la reformation d'un nouveau revêtement hydrophobe/oléophobe pour remédier à l'érosion du revêtement précédent ne pose pas de difficulté particulière ; elle peut être effectuée sur le revêtement ancien, une fois que celui-ci a été succinctement nettoyé. L'intérêt de retarder autant que possible cette opération demeure néanmoins évident.

Les inventeurs ont, à présent, mis en oeuvre une technique différente apte à procurer une durabilité améliorée des revêtements hydrophobes/oléophobes de types cités ci-dessus.

A cet effet, l'invention a pour objet un vitrage pour bâtiment ou véhicule de transport dont une partie, au moins, de la surface transparente est constituée d'un substrat revêtu d'un film mésoporeux caractérisé en ce que des molécules chimiques (notamment hydrophobes/oléophobes) sont liées au film mésoporeux.

Au sens de l'invention, le terme « mésoporeux » fait référence à des pores de dimensions comprises entre 1,2 et 40 nm, en particulier entre 1,2 et 20 nm. Il a en effet été constaté non sans surprise que le greffage de molécules hydrophobes/oléophobes sur une couche mésoporeuse garantissait une persistance remarquable de la fonction hydrophobe/oléophobe dans le temps, même dans des conditions d'érosion rigoureuses. Les performances excellentes développées ci-dessous sont supposées résulter de la conjonction de quatre caractéristiques au moins :
1) une bonne adhésion du revêtement mésoporeux au vitrage;
2) une bonne adhésion, favorisée par l'ancrage mécanique, des molécules hydrophobes/oléophobes au revêtement mésoporeux ;
3) une bonne résistance à l'abrasion du revêtement mésoporeux ; et
4) une libération et une mise en action des molécules hydrophobes/oléophobes échelonnées dans le temps.

Le vitrage peut être - mais n'est pas nécessairement - transparent et présenter, dans ce cas, d'excellentes propriétés optiques lui permettant de satisfaire aux normes en usage.

Des molécules chimiques autres qu'hydrophobes/oléophobes peuvent également être liées au film mésoporeux afin de constituer des revêtements d'excellente durabilité.

Il s'agit notamment de molécules hydrophiles/oléophiles parmi lesquelles on peut citer, en tant que produit final ou précurseur, les polyacide (méth)acrylique tel quel ou au moins partiellement salifié au sodium, potassium, césium..., tensioactifs non ioniques, esters de cellulose tels qu'hydroxypropylcellulose, dérivés de chitosan et de chitine, polyméthacrylates, poly (alcools vinyliques) et poly (acétate de vinyle), polypyrrole, polyaniline, poly (acrylamide), poly (N,N- diméthylacrylamide), poly (N-isopropylacrylamide), poly (éthylène glycol), poly (propylène glycol), poly (oxyéthylène) à fonctions hydroxy ou méthoxy terminales, chlorhydrate de poly (allylamine), poly (saccharide), dextrans (ramifiés), pullulan (polysaccharide linéaire), poly (acide styrène carboxylique) et sel de celui-ci, poly (acide stryrène sulfonique), poly (stryrène sulfonate) de sodium, poly (vinyl butyral), poly (iodure de 2-vinyl-N-méthyl pyridinium), poly (iodure de 4-vinyl-N-méthyl pyridinium), poly (2-vinyl pyridine), poly (bromure de 2-vinyl pyridinium), poly (vinyl pyrrolidone), copolymères obtenus à partir de monomères de départ de différents polymères précités, et notamment copolymères séquencés, certains composés du titane tels que tétraisopropyle de titane ou tétraisobutyle de titane, éventuellement stabilisé, par exemple par acétylacétonate, tétrachlorure de titane, ...

Peuvent également être liées au film mésoporeux des molécules anti-bactériennes, anti-fongiques, ou de parfum classiques...

Le processus de liaison au film mésoporeux comprend, selon les cas, une imprégnation et/ou une polymérisation in situ.

Le substrat est constitué, d'un matériau verrier ou d'une matière plastique du type cité précédemment. Il peut consister en une feuille unique, un feuilleté formé de plusieurs feuilles assemblées ou bien être un objet massif dont la surface destinée à recevoir le revêtement mésoporeux est lisse, en général, mais non nécessairement plane.

Le matériau verrier dans lequel on est susceptible de former le vitrage est un verre, une céramique ou une vitrocéramique. On emploie de préférence le verre, notamment le verre float de composition classique, éventuellement durci ou trempé, un borosilicate d'aluminium et de sodium ou toute autre composition. Dans ce cas, l'invention n'exclue nullement l'interposition, entre le verre et le film mésoporeux, ou du côté de la feuille de verre opposé de celui où se trouve le film mésoporeux, de couches fonctionnelles habituelles pour vitrages : empilements anti-reflet ou, au contraire, couches réfléchissantes, couches conductrices d'électricité, décoratives ou à propriétés thermiques telles que bas-émissives, etc.

De nombreux éléments chimiques peuvent être à la base du film mésoporeux : celui-ci comprend comme matériau constitutif essentiel au moins un composé de l'un au moins des éléments : Si, W, Sb, Ti, Zr, Ta, V, Pb, Mg, A1, Mn, Co, Ni, Sn, Zn.

En référence à la description ci-dessus des molécules chimiques qui, conformément à l'invention, peuvent être liées au film mésoporeux et qui comprennent, en tant que molécules hydrophiles/oléophiles, certains composés du titane, il doit être observé que lorsque le film mésoporeux lui-même est à base de titane, notamment sous forme de dioxyde TiO₂, il présente également des propriétés d'hydrophilie/oléophilie (anti-buée/anti-givre), ainsi que l'aptitude à décomposer par voie photocatalytique les résidus organiques (propriété anti-salissures), et ceci en l'absence de liaison avec des molécules chimiques. Cependant, la liaison à ce type de films mésoporeux de certains composés du titane est susceptible de procurer une augmentation plus ou moins importante de la durabilité des fonctions correspondantes mentionnées ci-dessus.

Selon une caractéristique avantageuse, le film mésoporeux présente un réseau périodique à l'échelle de domaines d'au moins 20 nm. Cette dimension caractéristique correspond à une dimension de domaines cohérents de diffraction et peut être déduite de manière connue par la formule de Scherrer de la largeur du pic principal - indexé 100 - du diagramme de diffraction des rayons X.

La possibilité d'orienter les domaines poreux - de manière ordonnée, par exemple tous perpendiculaires au substrat ou tous parallèles au substrat, en vue, notamment dans ce dernier cas, d'obtenir des revêtements conducteurs d'électricité.

Conformément à une variante particulièrement intéressante de l'invention, le film mésoporeux est en effet conducteur d'électricité. Il est alors par exemple constitué d'oxydes métalliques sous-stoechiométriques et/ou dopés tels que décrits dans la demande FR 2 695 117.

Des exemples mentionnés dans cette demande en sont l'oxyde d'indium dopé à l'étain (ITO), l'oxyde de zinc dopé à l'indium (ZnO:In), au fluor (ZnO:F), à l'aluminium (ZnO:Al) ou à l'étain (ZnO:Sn) et l'oxyde d'étain dopé au fluor (SnO₂:F). En plus de leurs propriétés de conduction de l'électricité, ces matériaux sont décrits comme présentant des propriétés de réflexion dans l'infrarouge, notamment de basse-émissivité. Néanmoins, l'aptitude du film mésoporeux à conduire l'électricité vise principalement, dans le cadre de la présente demande, la fonction antistatique, c'est-à-dire la capacité de dissiper les charges électrostatiques et à en éviter l'accumulation localement et, dans une moindre mesure, la constitution de films chauffants, notamment pour le dégivrage et le désembuage de vitrages. Un autre matériau conducteur d'électricité, utilisable est l'oxyde d'étain dopé antimoine (pentavalent ou trétravalent) SnO₂:Sb.

Dans le substrat de l'invention, l'épaisseur du film mésoporeux est avantageusement comprise entre 10 nm et 10 µm et, particulièrement, entre 0,05 et 5 µm.

Les molécules hydrophobes/oléophobes sont, de préférence, choisies dans le groupe constitué par:
a) les silicones, et
b) les composés répondant aux formules :

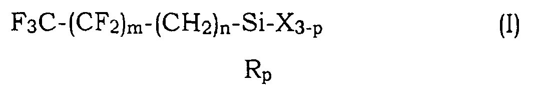

   et Rp'SiX_{4-p'} (II)

   dans lesquelles :
   - m = 0 à 15;
   - n=1 à 5;
   - p=0, 1 ou 2 ;
   - R est un groupe alkyle linéaire ou ramifié ou un atome d'hydrogène ;
   - X est un groupe hydrolysable tel qu'un groupe halogéno, alkoxy, acétoxy, acyloxy, amino, NCO ;
   - p'=0, 1,2 ou 3.

Un composé courant répondant à la formule (II) est l'octadécyltrichlorosilane.

En tant que silicones peuvent être mentionnés les polydialkylsiloxanes. Par ailleurs, des composés répondant à la formule (I) ont déjà été décrits dans la demande EP 0 799 873 A1 par exemple.

D'autre part, l'invention a également pour objet un procédé de fabrication d'un substrat tel que décrit ci-dessus, dans lequel :
- le substrat est mis en contact avec une composition de groupes assembleurs organiques et d'au moins un précurseur du matériau constituant le film mésoporeux,
- le précurseur précipite autour des groupes assembleurs organiques et ses molécules croissent, puis
- les groupes assembleurs organiques sont éliminés, par exemple par calcination ou extraction à l'éthanol acidifié.

Selon l'invention, ce procédé se caractérise par le fait que des molécules chimiques, telles qu'hydrophobes/oléophobes sont ensuite mises en contact sous forme d'une solution ou d'un gaz les contenant, avec le film mésoporeux.

Ce procédé est remarquable en ce qu'il permet une obtention aisée de pores de dimensions sensiblement monodisperses, comprises entre 1,2 et 40 nm. L'ajustement de cette dimension peut être obtenu par un choix approprié des groupes assembleurs organiques, c'est-à-dire par exemple de la longueur plus ou moins importante des chaînes carbonées les constituant. La durabilité de la fonction hydrophobe/oléophobe du substrat, résultant de la mise en contact de molécules hydrophobes/oléophobes avec le film mésoporeux formé comme il vient d'être indiqué, est excellente.

Selon la nature de la surface destinée à être revêtue du film mésoporeux, il peut être recommandé, voire nécessaire, d'interposer une couche de primaire afin de favoriser l'adhésion du film mésoporeux à son support et/ou d'obtenir simplement une qualité suffisante de cette adhésion. A cette fin, on dépose sur le substrat, préalablement à sa mise en contact avec la composition contenant le précurseur du matériau mésoporeux, une couche de potentiel isoélectrique supérieur ou égal au pH de ladite composition.

Un mode de réalisation particulièrement favorable du procédé de l'invention consiste en ce que les groupes assembleurs organiques sont constitués de micelles de molécules tensioactives cationiques, le précurseur du matériau mésoporeux est un alkoxyde de silicium, et ils sont en solution et, éventuellement, sous forme hydrolysée.

De manière particulièrement avantageuse, le tensioactif cationique est le bromure de cétyltriméthylammonium, le précurseur du matériau mésoporeux est en solution sous sa forme résultant d'une hydrolyse en milieu acide:Si(OH)₄ et le rapport molaire tensioactif:Si est compris entre 10⁻⁴ et 0,5. Cette combinaison constitue un ensemble de conditions optimales pour obtenir le film mésoporeux ; on suppose qu'elle a une influence favorable sur la géométrie micellaire, mais celle-ci repose sur des modifications énergétiques complexes non totalement comprises à l'heure actuelle.

Cependant, l'un des atouts majeurs de la technique employée pour la mise en oeuvre de l'invention réside dans la possibilité de faire varier la dimension des pores du film mésoporeux dans l'ensemble des valeurs indiquées précédemment par un choix judicieux des groupes assembleurs organiques. Pour ceux-ci peuvent ainsi être utilisés des tensioactifs anioniques, non ioniques, des molécules amphiphiles, par exemple des copolymères blocs...

L'exemple qui suit permettra de mieux comprendre l'invention.

### EXEMPLE

Un film mésoporeux de silice conforme à l'invention est déposé sur trois échantillons de verre flotté silico-sodo-calcique.

Chaque échantillon est soigneusement nettoyé par :
- agitation en bain ultrasons 30 min dans une solution de détergent ;
- rinçage à l'eau ;
- agitation 15 min aux ultrasons dans de l'eau ultra-pure ; et
- séchage à l'azote.

Une fois le substrat nettoyé, on dépose sur la surface de chaque échantillon une couche de précipité d'alumine dont l'épaisseur, déterminée par microscopie à force atomique, est d'environ 5 nm.

Le protocole opératoire en est le suivant :

Une solution de KOH 10⁻² M est ajoutée à une solution contenant 150 ml de KNO₃ 10⁻² M et 60 ml de Al(NO₃)₃ 10⁻⁴ M, de manière à atteindre un pH de 6,5. Les substrats de verre sont alors déposés dans la solution sous agitation et laissés 15 min. Après rinçage dans une solution de KNO₃ 10⁻² M et séchage à l'azote, les échantillons sont mis en étuve à 150°C pendant une heure. Un rinçage à l'eau permet ensuite d'éliminer les cristaux de KNO₃ éventuellement présents sur le substrat. (Le potentiel isoélectrique de l'alumine vaut 9 et est supérieur au pH de la composition de départ de la formation du film mésoporeux, déposée ultérieurement).

Il est alors procédé à la formation du film mésoporeux proprement dite, selon une technique sol-gel.

Un mélange de tétraéthoxysilane (TEOS), d'eau acidifiée par HCl à pH 2,5 et d'éthanol dans des proportions molaires respectives 1:10:6 est agité à température ambiante pendant 18 heures. L'éthanol est ensuite partiellement évaporé sous un vide de 1 mbar jusqu'à ce que la moitié du volume initial de la solution soit évaporée. On obtient une solution incolore et transparente principalement composée d'acide silicique (Si(OH)₄) et d'eau.

Un tensioactif cationique est alors directement dissout dans la solution de TEOS préhydrolysé ainsi obtenue. Il s'agit du bromure de cétyltriméthylammonium (CTAB), introduit en quantité telle que le rapport molaire r = CTAB:Si soit égal à 0,1. Compte tenu de sa nature amphiphile, le tensioactif forme des structures supramoléculaires ou micelles.

On nettoie chaque échantillon muni de sa couche d'alumine servant de primaire, par exposition de sa surface à une irradiation UV-C intense sous courant d'oxygène, ce qui a pour effet d'oxyder et d'éliminer les pollutions carbonées présentes.

Immédiatement après cette opération de nettoyage, on dépose le sol contenant le TEOS et le CTAB sur chaque échantillon par « spin coating ». Selon cette technique, l'échantillon est en rotation rapide pendant le dépôt ; cette opération de spin coating se caractérise par une accélération de 1500 tours/min/s, une vitesse de 2500 tours/min et un temps de rotation de 30 s.

Immédiatement après dépôt, les films sont chauffés quelques heures à 100°C.

Le CTAB est ensuite extrait du film de chaque échantillon par calcination en four tubulaire à 400°C sous air avec une montée de 10°C/h. Le film ainsi formé sur les trois échantillons est transparent, mésoporeux et son épaisseur, déterminée par microscope à force atomique en déplaçant la pointe sur la tranche de l'échantillon, est d'environ 1 µm. Le réseau poreux correspond au volume laissé vacant par l'élimination des micelles de CTAB, compte tenu des contractions susceptibles de se produire au cours des opérations de chauffage/calcination entre autres. Le diamètre moyen des pores est d'environ 3 nm.

Un premier échantillon est traité par voie gazeuse à pression réduite et à température ambiante avec C₁₀F₁₇H₄SiCl₃.

On évalue alors quantitativement le caractère hydrophobe de l'échantillon par mesure de l'angle de contact de l'eau initial ; celui-ci est de 105°.

On évalue ensuite la résistance à l'abrasion de la propriété hydrophobe/oléophobe en mesurant l'angle de contact de l'eau après 100 tours de test Taber (100 tours d'une meule CS 10F avec application d'une force de 500 g). Le résultat de 82° traduit une bonne résistance à l'abrasion.

Le deuxième et le troisième échantillons sont traités en deux temps. Tout d'abord, on greffe en voie gazeuse à 60°C du diéthylchlorosilane. Puis on fait réagir par hydrosilylation les Si-H des molécules de diéthylchlorosilane greffées avec des polydiméthylsiloxanes divinylterminés de masses molaires moyennes en nombre Mₙ de 2500, respectivement 12500, en présence de catalyseurs de Karsted.

D'autre part, chacun des deux polydiméthylsiloxanes divinylterminés (Mₙ 2500 et Mₙ 12500) est greffé séparément sur un échantillon de verre flotté silico-sodo-calcique nu, c'est-à-dire exempt de revêtement mésoporeux. Le greffage est effectué comme indiqué précédemment.

On mesure à nouveau l'angle de contact de l'eau initial et après 100 tours de test Taber. Les résultats sont reportés dans le tableau ci-dessous.

**TABLEAU**

| | Couche mésoporeuse | | Verre nu | |
|---|---|---|---|---|
| | Angle initial | Après 100 t test Taber | Angle initial | Après 100 t test Taber |
| Mₙ 2500 | 95° | 71° | 97° | 45° |
| Mₙ 12500 | 102° | 78° | 101° | 49° |

Il est clair que la présence de la couche mésoporeuse permet de préserver la propriété d'hydrophobie/oléophobie à un degré bien supérieur dans des conditions d'abrasion rigoureuses.

Ainsi, l'invention met-elle à disposition un substrat dont la transparence et la qualité optique lui permettent d'être employé dans des vitrages tels que pare-brise de véhicule automobile ou d'avion. Il est susceptible, en particulier, d'en constituer la surface extérieure, la durabilité excellente de son revêtement hydrophobe/oléophobe le désignant particulièrement à cet effet, notamment quand des essuie-glace, ou autres sources abrasives, sont utilisés.

## Revendications

1. Vitrage pour bâtiment ou véhicule de transport, dont une partie au moins de la surface transparente est constituée d'un substrat revêtu d'un film mésoporeux, dans lequel des molécules chimiques sont liées au film mésoporeux.

2. Vitrage selon la revendication 1, **caractérisé en ce que** le substrat est constitué d'un matériau verrier ou d'une matière plastique.

3. Vitrage selon la revendication 2, **caractérisé en ce que** le substrat est en verre.

4. Vitrage selon la revendication 1, **caractérisé en ce que** le film mésoporeux est à base d'au moins un composé de l'un au moins des éléments : Si, W, Sb, Ti, Zr, Ta, V, Pb, Mg, Al, Mn, Co, Ni, Sn, Zn, In.

5. Vitrage selon la revendication 4, **caractérisé en ce que** le film mésoporeux présente un réseau périodique à l'échelle de domaines d'au moins 20 nm.

6. Vitrage selon la revendication 4 ou 5, **caractérisé en ce que** le film mésoporeux est conducteur d'électricité.

7. Vitrage selon l'une des revendications précédentes, **caractérisé en ce que** lesdites molécules chimiques sont hydrophobes/oléophobes et choisies dans le groupe constitué par:
a) les silicones, et
b) les composés répondant aux formules : 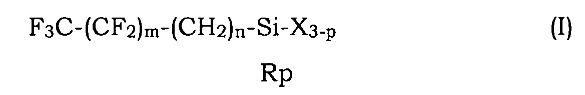
et Rp'SiX_{4-p'} (II)
dans lesquelles :
• m = 0 à 15 ;
• n= 1à5;
• p'=0,1 ou 2;
• R est un groupe alkyle linéaire ou ramifié ou un atome d'hydrogène ;
• X est un groupe hydrolysable tel qu'un groupe halogéno, alkoxy, acétoxy, acyloxy, amino, NCO ;
• p= 0,1,2 ou 3.

8. Procédé de fabrication d'un vitrage selon la revendication 1 comprenant :
• la mise en contact du substrat avec une composition de groupes assembleurs organiques et d'au moins un précurseur du matériau constituant le film mésoporeux,
• la précipitation du précurseur autour des groupes assembleurs organiques et la croissance des molécules du précurseur, puis
• l'élimination des groupes assembleurs organiques,
**caractérisé en ce que** des molécules chimiques, telles qu'hydrophobes/oléophobes sont ensuite mises en contact sous forme d'une solution ou d'un gaz les contenant, avec le film mésoporeux.

9. Procédé selon la revendication 8, **caractérisé en ce que** préalablement à la mise en contact du substrat avec ladite composition, une couche de potentiel isoélectrique supérieur ou égal au pH de ladite composition est déposée sur le substrat.

10. Procédé selon la revendication 8, **caractérisé en ce que** les groupes assembleurs organiques sont constitués de micelles de molécules tensioactives cationiques, **en ce que** ledit précurseur est un alkoxyde de silicium et **en ce qu'**ils sont en solution et, éventuellement, sous forme hydrolysée.

11. Procédé selon la revendication 10, **caractérisé en ce que** le tensioactif cationique est le bromure de cétyltriméthylammonium, **en ce que** ledit précurseur est en solution sous sa forme résultant d'une hydrolyse en milieu acide : Si(OH)₄, et **en ce que** le rapport molaire tensioactif : Si est compris entre 10⁻⁴ et 0,5.

## Claims

1. Glazing for buildings or transportation vehicles, at least part of the transparent surface of which consists of a substrate coated with a mesoporous film, in which chemical molecules are bonded to the mesoporous film.

2. Glazing according to Claim 1, **characterized in that** the substrate is made of glass material or a plastic.

3. Glazing according to Claim 2, **characterized in that** the substrate is made of glass.

4. Glazing according to Claim 1, **characterized in that** the mesoporous film is based on at least one compound of at least one of the elements: Si, W, Sb, Ti, Zr, Ta, V, Pb, Mg, Al, Mn, Co, Ni, Sn, Zn, In.

5. Glazing according to Claim 4, **characterized in that** the mesoporous film has a periodic lattice on the scale of domains at least 20 nm in size.

6. Glazing according to Claim 4 or 5, **characterized in that** the mesoporous film is electrically conducting.

7. Glazing according to one of the preceding claims, **characterized in that** the said chemical molecules are hydrophobic/oleophobic and are chosen from the group consisting of:
a) silicones: and
b) compounds satisfying the formulae: 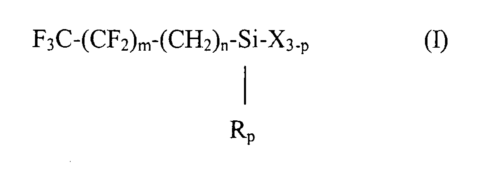 and Rₚ'SiX_{4-p'} (II)
in which:
• m = 0 to 15;
• n=1 to 5;
• p'=0,1 or 2;
• R is a linear or branched alkyl group or a hydrogen atom;
• X is a hydrolysable group such a halogen, alkoxy, acetoxy, acyloxy, amino or NCO group;
• p =0,1, 2 or 3.

8. Process for manufacturing glazing according to Claim 1, comprising:
• bringing the substrate into contact with a composition formed from organic assembling groups and from at least one precursor for the material constituting the mesoporous film;
• precipitating the precursor around the organic assembling groups and growing the molecules of the precursor; and then
• removing the organic assembling groups,
**characterized in that** chemical molecules, such as hydrophobic/oleophobic molecules, are then brought into contact, in the form of a solution or of a gas containing them, with the mesoporous film.

9. Process according to Claim 8, **characterized in that**, prior to bringing the substrate into contact with the said composition, a layer having an isoelectric potential greater than or equal to the pH of the said composition is deposited on the substrate.

10. Process according to Claim 8, **characterized in that** the organic assembling groups consist of micelles of cationic surfactant molecules, **in that** the precursor is a silicon alkoxide and **in that** they are in solution and, possibly, in hydrolysed form.

11. Process according to Claim 10, **characterized in that** the cationic surfactant is cetyltrimethylammonium bromide, **in that** the said precursor is in solution in its form resulting from hydrolysis in acid medium, Si(OH)₄, and **in that** the surfactant/Si molar ratio is between 10⁻⁴ and 0.5.

## Patentansprüche

1. Glas für ein Gebäude oder Transportfahrzeug, wovon wenigstens ein Teil der transparenten Fläche aus einem Substrat gebildet ist, das mit einem mesoporösen Film beschichtet ist, in welchem chemische Moleküle mit dem mesoporösen Film verbunden sind.

2. Glas nach Anspruch 1, **dadurch gekennzeichnet, dass** das Substrat aus einem Glasmaterial oder einem Kunststoff gebildet ist.

3. Glas nach Anspruch 2, **dadurch gekennzeichnet, dass** das Substrat aus Glas besteht.

4. Glas nach Anspruch 1, **dadurch gekennzeichnet, dass** der mesoporöse Film auf der Grundlage von wenigstens einer Verbindung mindestens eines der Elemente: Si, W, Sb, Ti, Zr, Ta, V, Pb, Mg, Al, Mn, Co, Ni, Sn, Zn und In ist.

5. Glas nach Anspruch 4, **dadurch gekennzeichnet, dass** der mesoporöse Film ein wiederkehrendes Netz mit der Größenordnung von Bereichen von mindestens 20 nm aufweist.

6. Glas nach Anspruch 4 oder 5, **dadurch gekennzeichnet, dass** der mesoporöse Film den elektrischen Strom leitet.

7. Glas nach einem der vorhergehenden Ansprüche, **dadurch gekennzeichnet, dass** die chemischen Moleküle hydrophob/oleophob und aus der Gruppe ausgewählt sind, die gebildet ist von den:
a) Siliconen und
b) Verbindungen mit der Formel: 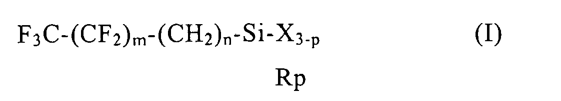 und
Rp'SiX_{4-p'} (II),
in welchen:
• m = 0 bis 15,
• n = 1 bis 5,
• p' = 0, 1 oder 2,
• R eine geradkettige oder verzweigte Alkylgruppe oder ein Wasserstoffatom und
• X eine hydrolysierbare Gruppe wie eine Halogen-, Alkoxy-, Acetoxy-, Acyloxy-, Amino- und NCO-Gruppe bedeutet und
• p = 0, 1, 2 oder 3.

8. Verfahren zur Herstellung eines Glases nach Anspruch 1, welches das:
• In-Berührung-Bringen des Substrats mit einer Zusammensetzung aus organischen Bindungsgruppen und mindestens einem Vorläufer des den mesoporösen Film bildenden Materials,
• Ausfällen des Vorläufers um die organischen Bindungsgruppen herum und das Wachstum der Vorläufermoleküle und
• Entfernen der organischen Bindungsgruppen umfasst,
**dadurch gekennzeichnet, dass** anschließend chemische Moleküle wie hydrophobe/oleophobe in Form einer Lösung oder eines Gases, die/das sie enthält, mit dem mesoporösen Film in Berührung gebracht werden.

9. Verfahren nach Anspruch 8, **dadurch gekennzeichnet, dass** vor dem In-Berührung-Bringen des Substrats mit der Zusammensetzung eine Schicht mit einem isoelektrischen Potential von über oder gleich dem pH-Wert dieser Zusammensetzung auf dem Substrat aufgebracht wird.

10. Verfahren nach Anspruch 8, **dadurch gekennzeichnet, dass** die organischen Bindungsgruppen Mizellen aus oberflächenaktiven kationischen Molekülen bilden, dass der Vorläufer ein Siliciumalkoxid ist und dass sie sich gelöst und gegebenenfalls in hydrolysierter Form befinden.

11. Verfahren nach Anspruch 10, **dadurch gekennzeichnet, dass** das kationische Tensid Cetyltrimethylammoniumbromid ist, dass der Vorläufer sich gelöst und in seiner Form Si(OH)₄ befindet, die aus einer Hydrolyse im sauren Milieu resultiert, und dass das Molverhältnis von Tensid : Si 10⁻⁴ bis 0,5 beträgt.
